# EUROPEAN PATENT SPECIFICATION

(11) **EP 3 006 405 B1**
(45) Date of publication and mention of the grant of the patent: **27.11.2019**
(21) Application number: 14807801.7
(22) Date of filing: 05.06.2014
(51) Int. Cl.: C02F 1/04, B01D 1/14, B01D 1/28, B01D 1/30, C02F 103/08

(54) **SEAWATER DESALINATION DEVICE AND SEAWATER DESALINATION METHOD**
MEERWASSERENTSALZUNGSVORRICHTUNG UND MEERWASSERENTSALZUNGSVERFAHREN
DISPOSITIF DE DESSALEMENT D'EAU DE MER ET PROCÉDÉ DE DESSALEMENT D'EAU DE MER

(30) Priority: 05.06.2013 JP 2013119332
(43) Date of publication of application: 13.04.2016
(73) Proprietor: Ohkawara Kakohki Co., Ltd., Yokohama-shi, Kanagawa 224-0053 (JP); The University of Tokyo, Tokyo 113-8654 (JP)
(72) Inventor: OHKAWARA, Masaaki, Yokohama-shi Kanagawa 224-0053 (JP); NEMOTO, Gentaro, Yokohama-shi Kanagawa 224-0053 (JP); KANSHA, Yasuki, Tokyo 113-8654 (JP); TSUTSUMI, Atsushi, Tokyo 113-8654 (JP); ISHIZUKA, Masanori, Tokyo 113-8654 (JP); MIZUNO, Hiroyuki, Tokyo 113-8654 (JP)
(74) Representative: Teipel, Stephan
(86) International application number: PCT/JP2014/065006
(87) International publication number: WO 2014/196610

(56) References cited:
- EP-A1- 1 798 202
- WO-A1-02/25201
- DE-A1- 2 928 392
- DE-A1- 4 036 345
- JP-A- S5 124 579
- JP-A- S5 955 303
- JP-A- S56 130 289
- JP-A- S56 501 115
- JP-A- S59 105 835
- JP-A- 2001 526 959
- JP-A- 2012 239 956
- JP-B2- S4 624 241
- US-A- 3 245 883

## Description

### Technical Field

The present invention relates to seawater desalination devices and seawater desalination methods based on an evaporation method. In particular, the present invention relates to a seawater desalination device and a seawater desalination method based on an evaporation method, which are effective for stable water supply without causing water shortage issues. In addition, the present invention relates to a seawater desalination device and a seawater desalination method based on an evaporation method, which are suitable for salt production.

### Background Art

An evaporation method and a membrane method are available for seawater desalination.

Such an "evaporation method" includes a multi-stage flash method and a multiple effect method. On the other hand, such a "membrane method" includes a reverse osmosis membrane method and an electrodialysis method.

When desalinating seawater using such an "evaporation method" described above, water can be obtained with an advantageously lowered salinity concentration. However, a large amount of energy is disadvantageously required throughout a desalination process of the method. In addition, when seawater is concentrated to a high level for desalination through the "evaporation method" described above, some phenomena including scaling can occur in a device and other equipment, resulting in some problems including lowered thermal efficiency.

Such scaling and other phenomena occurred through a process of an evaporation method further can cause sulfate and carbonate to be extracted from scaling components such as calcium and magnesium in seawater due to concentration and raised water temperature, and to be adhered onto a surface of a heat transfer pipe. Because of this, thermal transfer efficiency is disadvantageously lowered, thus an amount of produced water is reduced. (Issued in Special edition/The basics and applications of water treatment technologies/The latest trends of seawater desalination, Chemical Devices, vol. 51(8), pp.25-30, 2009-08-00 Kogyo Chosakai Publishing Co., Ltd.)

Advantageously, desalinating seawater based on the "membrane method" described above consumes less energy, when compared with the evaporation method described above. However, any pretreatments including sterilization and removal of adhering matters are required. In addition, because the obtained water has a high level of salinity concentration, the water can neither be used for industrial water nor city water.

Patent Document 1 describes a "heating module" that includes a "first heat exchanger" for exchanging heat between an input fluid and an output fluid; a "first compressor" for compressing and heating either of the input fluid or the output fluid; and an expansion machine for expanding and cooling the input fluid. The "heating module" described in this Patent Document 1 has an object to increase an energy saving effect.

Patent Document 2 describes a "separation process module" that includes a "separator" for separating an input fluid that includes a first component and a second component into a first output fluid that includes the first component and a second output fluid that includes the second component; and a "first compressor" for compressing and heating the first output fluid output from the separator. In addition, the "separation process module" described above includes a first heat exchanger, a second heat exchanger, and a third heat exchanger. The "separation process module" described in this Patent Document 2 has an object to increase an energy saving effect.

### Citation List

### Patent Documents

[Patent Document 1] JP-A-2010-36056
[Patent Document 2] JP-A-2010-36057

In addition, WO 02/25201 A1 discloses a steam re-compression evaporator using a fluidized bed heat exchanger.

### Summary of the Invention

### Problem to be Solved by the Invention

The modules described in Patent Documents 1 and 2 can be appreciated in the view point of increasing energy efficiency. However, the modules are not suited for seawater desalination. For example, the modules described in above Patent Documents 1 and 2 are difficult to recover and treat obtained "liquids" such as a desalinated liquid and extracted "solids" such as salt both obtained when desalinating seawater.

In addition, because the modules described in above Patent Documents 1 and 2 are difficult to recover and treat obtained "liquids" such as a desalinated liquid and extracted "solids" such as salt, these modules are also difficult to solve problems including a reduced amount of produced water due to lowered thermal transfer efficiency caused by sulfate and carbonate extracted from calcium and magnesium through concentration and raised water temperature and adhered onto a surface of a heat transfer pipe.

The present invention has been made in view of solving the above-mentioned problems, and has an object to provide a seawater desalination device and a seawater desalination method based on an evaporation method, which can reduce, by using an self-heat recuperation process, an amount of necessary energy in half or less, compared with a conventional multi-stage flash method. Particularly, the present invention is aimed to provide a seawater desalination device and a seawater desalination method based on an evaporation method through which, by using a three-phase fluidized bed, a high thermal efficiency operation is possible even at a high salinity concentration level, while preventing scaling to a heat-transmitting surface.

### Means for Solving the Problem

According to the present invention, a seawater desalination device and a seawater desalination method are provided.
[1] A seawater desalination device for seawater desalination, comprising:
   a steam re-compressor capable of generating pressurized steam by pressurizing steam;
   a first heat exchanger capable of exchanging amount of liquid sensible heat of seawater to be desalinated with amount of liquid sensible heat after the pressurized steam is condensed, and
   amount of sensible heat of a concentrated liquid after the seawater is concentrated;
   a second heat exchanger capable of exchanging amount of heat of the pressurized steam,
   latent heat of vaporization of the seawater, and amount of steam sensible heat when the seawater is evaporated, and capable of concentrating the seawater wherein the second heat exchanger is a three-phase fluidized bed;
   a steam circulation means for using steam generated in a process for evaporating seawater as a fluidizing gas in the three-phase fluidized bed;
   seawater supply means that supplies the seawater to the first heat exchanger, and further supplying the seawater from the first heat exchanger to the second heat exchanger;
   steam supply means that supplies steam evaporated from the seawater to the second heat exchanger;
   first discharge means that discharges externally either of the concentrated seawater liquid after the seawater is concentrated or salt extracted from the seawater, or both of the concentrated seawater liquid and the salt;
   second discharge means that discharges externally freshwater separated from the seawater; and
   water-droplet separation means that separates droplets of water mixed into the steam evaporated from the seawater and discharged from the second heat exchanger.
[2] The seawater desalination device according to [1], wherein all amount of heat necessary for seawater desalination is fully generated by the steam re-compressor.
[3] The seawater desalination device according to [1] or [2], wherein the second heat exchanger includes a heat transfer region for desalinating the seawater, the heat transfer region having an adjustable-formed heat transfer area.
[4] The seawater desalination device according to any one of [1] to [3], wherein the steam circulation means include a circulation line for circulating steam into a channel in the second heat exchanger.
[5] A seawater desalination method for seawater desalination using the device of [1], said method comprising:
   a step of generating pressurized steam by pressurizing steam;
   a first heat-exchange step of exchanging amount of a liquid sensible heat of seawater to be desalinated with amount of liquid sensible heat after the pressurized steam is condensed, and
   amount of sensible heat of a concentrated liquid after the seawater is concentrated; and
   a second heat-exchange step of exchanging amount of heat of the pressurized steam, amount of latent heat of vaporization of the seawater, and amount of steam sensible heat when the seawater is evaporated, and concentrating the seawater wherein the second heat-exchange step is conducted using a three-phase fluidized bed and steam generated in a process for evaporating seawater is used as a fluidizing gas in the three-phase fluidizing bed, the method further comprising:
      a step of supplying the seawater to the first heat-exchange step, and further supplying the seawater from the first heat-exchange step to the second heat-exchange step;
      a step of supplying steam evaporated from the seawater to the second heat-exchange step;
      a first discharge step of discharging externally either of the concentrated seawater liquid after the seawater is concentrated or salt extracted from the seawater, or both of the concentrated seawater liquid and the salt; and
      a step of separating droplets of water mixed into the steam evaporated from the seawater and discharged in the second heat-exchange step.
[6] The seawater desalination method according to [5], comprising the step of circulating steam into the second heat-exchange step.

### Effect of the Invention

With a seawater desalination device and a seawater desalination method based on an evaporation method according to the present invention, an amount of necessary energy can be reduced in half or less, compared with a consumption energy necessary through a conventional multi-stage flash method. Particularly, by using a three-phase fluidized bed, a high thermal efficiency operation is possible even in a high salinity concentration level, while preventing scaling to a heat-transmitting surface.

### Brief Description of the Drawing

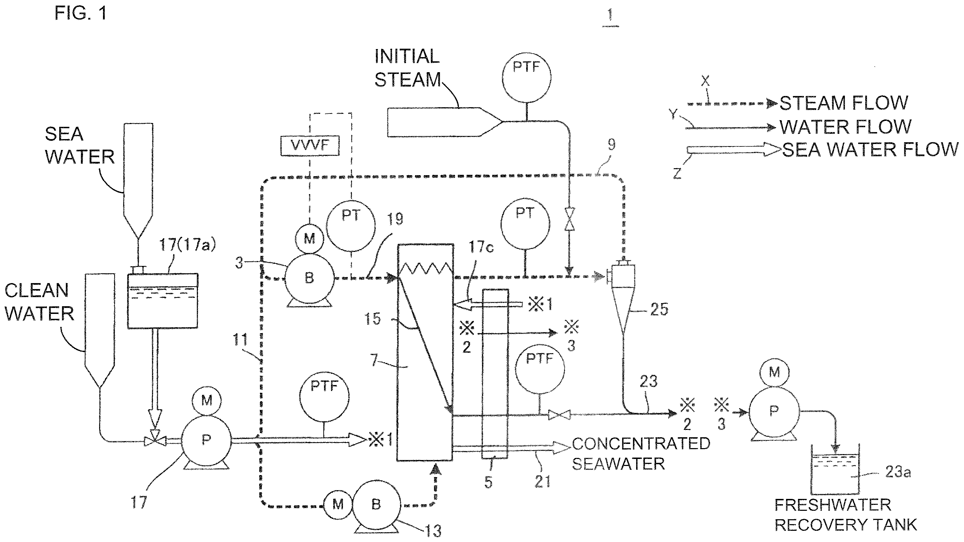

Fig. 1 is a schematic view of a seawater desalination device according to the present invention.

### Mode for Carrying out the Invention

A seawater desalination device according to the present invention will now be specifically described herein. However, the present invention broadly includes any seawater desalination devices that include the matters used to specify the present invention, and the present invention is not limited to embodiments described below.

### [1] Seawater desalination device according to the present invention:

A seawater desalination device for seawater desalination according to the present invention is mainly configured with a steam re-compressor, a first heat exchanger, a second heat exchanger, a seawater supply means, a steam supply means, a first discharge means, a second discharge means, and a water-droplet separation means, wherein the second heat exchanger is a three-phase fluidized bed, and the device further comprising a steam circulation means for using steam generated in a process for evaporating seawater as a fluidizing gas in the three-phase fluidized bed. The "steam re-compressor" described above is capable of generating pressurized steam by pressurizing a steam. The "first heat exchanger" described above is capable of exchanging amount of liquid sensible heat of seawater to be desalinated with amount of sensible heat of a liquid after pressurized steam is condensed, and amount of sensible heat of a concentrated liquid after seawater is concentrated. The "second heat exchanger" described above is capable of exchanging amount of heat of pressurized steam, amount of latent heat of vaporization of seawater, and amount of steam sensible heat when seawater is evaporated, as well as is capable of concentrating seawater. The "seawater supply means" described above is a means that supplies seawater to the first heat exchanger, and for further supplying seawater from the first heat exchanger to the second heat exchanger. The "steam supply means" described above is a means that supplies steam evaporated from seawater to the second heat exchanger. The "first discharge means" described above is a means that discharges externally either of a concentrated seawater liquid after seawater is concentrated or salt extracted from seawater, or both of concentrated seawater liquid and salt. The "second discharge means" described above is a means that discharges externally freshwater separated from seawater. The "water-droplet separation means" described above is a means that separates droplets of water mixed into steam evaporated from seawater and discharged from the second heat exchanger.

### [1-1] Steam re-compressor:

A steam re-compressor (compressor) according to the present invention generates pressurized steam by pressurizing a steam. That is, the steam re-compressor is used to re-compress steam supplied into a channel in a seawater desalination device. Such a steam re-compressor includes, for example, a compressor and a steam compressing blower. However, the present invention is not limited to such a configuration.

It is preferable that steam generated in a process for evaporating a raw liquid, i.e. seawater, is compressed and pressurized by the steam re-compressor. Additionally, instead of steam generated in a process for evaporating a raw liquid, i.e. seawater, steam introduced into a seawater desalination device may be used. However, it is still preferable that steam generated in a process for evaporating a raw liquid, i.e. seawater, is used in a process. However, it is preferable that more steam generated in a process for evaporating a raw liquid, i.e. seawater, described above is contained, because the more the steam generated in a process for evaporating a raw liquid, i.e. seawater, is contained, the more the energy efficiency increases.

In addition, it is preferable that the "steam re-compressor" described above is capable of re-compressing of "the steam" described above to increase an amount of heat. This is for increasing energy efficiency by using steam re-compressor to increase the pressurized steam by an amount of heat exchange temperature difference, and to exchange the amount of increased heat with the amount of heat of seawater to be desalinated in seawater desalination devices.

In addition, it is preferable that all amount of heat necessary for seawater desalination is fully generated by the steam re-compressor described above. By configuring a device in such a manner, energy efficiency can be increased to a maximum.

Furthermore, in order to efficiently desalinate seawater, it is preferable that a channel in a seawater desalination device is excessively heated before desalinating seawater. However, when such a channel in a seawater desalination device is excessively heated before desalinating seawater, an amount of heat through excessive-heating of the channel in the seawater desalination device is not included in all amount of heat necessary for seawater desalination using the "steam re-compressor" described above.

The "steam re-compressor" described above includes, for example, a compressor and a steam compressing blower. For example, by using a steam-compatible compressor (steam compressor), fluctuations of pressure and other factors occurred when controlling such a compressor with an inverter can finely be followed-up. In addition, energy efficiency can be increased throughout a seawater desalination process using a steam compressor based on an self-heat recuperation technology.

### [1-2] Heat exchanger:

A "heat exchanger" according to the present invention is configured with a first heat exchanger and a second heat exchanger. The "heat exchanger" is capable of exchanging amount of heat of pressurized steam and seawater to be desalinated. That is, the "heat exchanger" described above is arranged for exchanging "amount of heat of pressurized steam" and amount of heat of "seawater to be desalinated" in each stage in a channel from "supplying a raw liquid, i.e. seawater," to a seawater desalination device to discharging either of a "concentrated seawater liquid after seawater is concentrated" or "salt extracted from seawater," or "both of concentrated seawater liquid and salt," and a "liquid after pressurized steam is condensed" from the seawater desalination device.

### [1-2-1] First heat exchanger:

A "first heat exchanger" according to the present invention is configured to exchange amount of liquid sensible heat of seawater to be desalinated with both of amount of liquid sensible heat after pressurized steam is condensed and a amount of sensible heat of a concentrated liquid after seawater is concentrated. That is, the first heat exchanger is arranged to exchange amount of sensible heat between "seawater to be desalinated," a "liquid after pressurized steam is condensed," and a "concentrated seawater liquid after seawater is concentrated, and deposition" in each stage in a channel from "supplying seawater to be desalinated" into a seawater desalination device to discharging either of a "concentrated seawater liquid after seawater is concentrated" or "salt extracted from seawater," or in a channel to discharging "both of concentrated seawater liquid and salt," and a "liquid after pressurized steam is condensed" from the seawater desalination device.

By configuring the "first heat exchanger" as described above, in conjunction with a "second heat exchanger" described later, generated heat (amount of heat) can fully be exchanged in a process from concentrating seawater to be desalinated to discharging externally either of a "concentrated seawater liquid after seawater is concentrated" or "salt extracted from seawater," or "both of concentrated seawater liquid and salt." Accordingly, a high efficiency heat exchange can be achieved. In addition, exchanging generated heat (amount of heat) fully in a process from concentrating seawater to be desalinated to discharging externally either of a "concentrated seawater liquid after seawater is concentrated" or "salt extracted from seawater," or "both of concentrated seawater liquid and salt" can provide a necessary energy for heat exchange, which is equivalent to a temperature difference, by driving a steam compressor only. Accordingly, a seawater desalination device according to the present invention requires no heating operation at all.

Furthermore, the "first heat exchanger" is described as a single device in Fig. 1. However, a plurality of separate heat exchangers may be used for exchanging amount of liquid sensible heat of seawater to be desalinated with amount of sensible heat of a liquid after pressurized steam is condensed and amount of sensible heat of a concentrated liquid after seawater is concentrated.

### [1-2-2] Second heat exchanger:

A "second heat exchanger" according to the present invention is capable of exchanging amount of heat of pressurized steam, amount of latent heat of vaporization of seawater, and amount of steam sensible heat when seawater is evaporated, as well as capable of concentrating the seawater. By configuring the "second heat exchanger" as described above, in conjunction with the "first heat exchanger" described above, generated heat (amount of heat) can fully be exchanged in a process from concentrating seawater to be desalinated to discharging externally either of a "concentrated seawater liquid after seawater is concentrated" or "salt extracted from seawater," or "both of concentrated seawater liquid and salt." Accordingly, a high efficiency heat exchange can be achieved. In addition, exchanging generated heat (amount of heat) fully in a process from concentrating seawater to be desalinated to discharging externally either of a "concentrated seawater liquid after seawater is concentrated" or "salt extracted from seawater," or "both of concentrated seawater liquid and salt," and a "liquid after pressurized steam is condensed" can provide a necessary energy for heat exchange, which is equivalent to a temperature difference, by driving a steam compressor only. Accordingly, a seawater desalination device according to the present invention requires no heating operation at all.

For example, as shown in Fig. 1, a "seawater desalination device 1" that is configured to store a "raw liquid," i.e. "seawater," in a "raw liquid tank 17a" that configures a seawater supply means 17, and to deliver a predetermined amount of a "raw liquid," i.e. "seawater," to a "first heat exchanger 5" with a pump P will now be described herein. The "seawater desalination device 1" described above is configured to further deliver "seawater" heated in the "first heat exchanger 5" described above to a "second heat exchanger 7" via a "seawater supply pipe 17c" that configures the seawater supply means 17. In addition, the "second heat exchanger 7" is coupled to a first discharge pipe, i.e. a "first discharge means 21," for discharging externally either of a "concentrated seawater liquid after seawater is concentrated" or "salt extracted from seawater," or "both of concentrated seawater liquid and salt." In addition, the "second heat exchanger 7" is coupled to "second discharge means 23" for externally discharging freshwater separated from seawater, including a second discharge pipe 23a.

A three-phase fluidized bed is used for the "second heat exchanger" described above. Such a three-phase fluidized bed is a fluidized bed in which a solid phase (a moving med-ium such as glass beads), a gas phase (steam), and a liquid phase (seawater) move. The three-phase fluidized bed used as the "second heat exchanger" described above can effectively exchange amount of heat of pressurized steam, amount of latent heat of vaporization of seawater, and amount of steam sensible heat when seawater is evaporated so as to securely desalinate seawater and extract salt. In addition, by allowing gas to flow inside the "three-phase fluidized bed" when concentrating seawater in the three-phase fluidized bed, a heat exchange surface can be kept clean, and thermal efficiency can be stably prevented from being lowered due to scaling to the heat exchange surface, even in a condition where seawater is concentrated at a high level.

The "three-phase fluidized bed" described above is formed in a cylinder and arranged so that an axis direction of the cylinder is vertical. By forming the "three-phase fluidized bed" in a cylinder, amount of heat of pressurized steam, amount of latent heat of vaporization of seawater to be concentrated, and amount of sensible heat of steam evaporated from seawater are fully exchanged inside the "three-phase fluidized bed" without causing non-uniformity of temperature. That is, seawater can be stably desalinated.

The "three-phase fluidized bed" described above consists of a metal. Non-uniformity of temperature rarely occurs in a metallic bed. Accordingly, temperature increase and temperature decrease can be easily controlled and the process can be done in a short period of time. In addition, thermal efficiency can be increased, while reducing a running cost. However, the present invention is not limited to such a configuration.

For the metal described above, SUS304, SUS316(L), SUS310S, titanium, Hastelloy (registered trademark), Inconel (registered trademark), and Incoloy (registered trademark) can be used. These metals are superior to heat and corrosion resisting properties.

Furthermore, in addition to the "three-phase fluidized bed" described above, it is preferable that each "seawater desalination device" is configured and formed with salt resistance materials. In addition to selecting a metal having corrosion resisting properties, it is desirable that a surface treatment such as plating and coating is applied for increasing corrosion resisting properties.

For a range of fluid velocity of pressurized steam to be fed from the "steam re-compressor 3" described above into the "three-phase fluidized bed 7" described above, 1 to 20 m/s is acceptable, 3 to 15 m/s is better, and 5 to 10 m/s is the best. By feeding pressurized steam in a predetermined fluid velocity range described above, supplied seawater can be heated in the "three-phase fluidized bed 7" described above to facilitate evaporation of seawater. Therefore, amount of heat of pressurized steam, amount of latent heat of vaporization of seawater, and amount of sensible heat of steam evaporated from seawater can be effectively exchanged. Accordingly, energy loss is low and seawater desalination, seawater concentration, and salt extraction can be easily done.

On the other hand, if a fluid velocity of pressurized steam fed from the "steam re-compressor 3" described above into the "three-phase fluidized bed 7" described above is below 1 m/s, heat exchange efficiency is sacrificed. In addition, if a fluid velocity of pressurized steam fed from the "steam re-compressor 3" described above into the "three-phase fluidized bed 7" described above exceeds 20 m/s, more power is required for a steam re-compressing device.

For a range of temperature of pressurized steam to be fed from the "steam re-compressor 3" described above into the "three-phase fluidized bed 7" described above, when a steam compressing blower is used for example, 110 to 130°C is acceptable, 115 to 125°C is better, and 117°C to 123°C is the best. Additionally, for a range of temperature of pressurized steam, when a steam compressor is used, 130 to 150°C is acceptable, 135 to 145°C is better, and 137 to 143°C is the best. By feeding pressurized steam in a predetermined temperature range described above, seawater sprayed into the "three-phase fluidized bed 7" described above can fully be heated to facilitate evaporation of seawater. Therefore, amount of heat of pressurized steam, amount of latent heat of vaporization of seawater, and amount of sensible heat of steam evaporated from seawater can be effectively exchanged. Accordingly, energy loss is low and seawater desalination, seawater concentration, and salt extraction can be easily done.

On the other hand, if a temperature of pressurized steam fed from the "steam re-compressor 3" described above into the "three-phase fluidized bed 7" described above is below 110°C when a steam compressing blower is used, or below 130°C when a steam compressor is used, a more heat transfer area is required for heat exchange. In addition, if a temperature of pressurized steam fed from the "steam re-compressor 3" described above into the "three-phase fluidized bed 7" described above exceeds 130°C when a steam compressing blower is used, or exceeds 150°C when a steam compressor is used, power is required excessively for a steam re-compressing device.

For a range of pressure of pressurized steam to be fed into the "steam re-compressor 3" described above into the "three-phase fluidized bed 7" described above, when a steam compressing blower is used for example, 0.14 to 0.27 MPa (absolute pressure) is acceptable, 0.17 to 0.23 MPa (absolute pressure) is better, and 0.18 to 0.21 MPa (absolute pressure) is the best. By feeding pressurized steam in a predetermined pressure range described above, seawater supplied into the "three-phase fluidized bed 7" described above can fully be heated to facilitate evaporation of seawater. Therefore, amount of heat of pressurized steam, amount of latent heat of vaporization of seawater, and amount of sensible heat of steam evaporated from seawater can be effectively exchanged. Accordingly, seawater can be desalinated and concentrated, and salt can be extracted easily.

On the other hand, if a pressure of pressurized steam fed from the "steam re-compressor 3" described above into the "three-phase fluidized bed 7" described above is below 0.14 MPa, amount of heat for necessary to heat-exchange is not obtained. In addition, if a pressure of pressurized steam fed from the "steam re-compressor 3" described above into the "three-phase fluidized bed 7" described above exceeds 0.27 MPa, more power is required for a steam re-compressing device.

In addition, it is preferable that the second heat exchanger includes a heat transfer region for seawater desalination. In addition, it is preferable that a heat transfer area of the "heat transfer region" described above is adjustably formed. The heat transfer region including an adjustable heat transfer area ensures an optimal heat transfer area in response to device power and operating temperatures.

The "heat transfer region" described above can include, for example, a heater and a heat transfer pipe. In addition, the "heat transfer region" described above including an adjustable heat transfer area may be achieved by allowing the heat transfer region to include a configuration having a plurality of heater elements and heat transfer pipes. However, the present invention is not limited to such a configuration.

The "heat transfer region" described above is arranged at a lower portion of the three-phase fluidized bed. By arranging the heat transfer region at the lower portion of the three-phase fluidized bed, heat can be effectively and transferred to the entire three-phase fluidized bed with an upward flow in the three-phase fluidized bed.

In addition, a steam circulation means is included, where steam generated in a process for evaporating seawater is used as a fluidized gas in the second heat exchanger. By configuring in such a manner, steam generated in a process for evaporating seawater can be used as a fluidized gas to flow inside the second heat exchanger for increased energy efficiency, at the same time a clean heat exchange surface can be maintained even in a condition where a raw liquid is concentrated at a high level. Therefore, a stable and energy-saving operation can be achieved even in a condition where seawater is concentrated at a high level. It is preferable that a blower having a discharge pressure of at least 5 kPa is used.

In addition, in such a fluidization means, steam generated in a process for evaporating seawater can be used as a fluidized gas for the second heat exchanger by arranging a circulation line in a channel of the second heat exchanger without arranging new other complex equipment.

For the "second heat exchanger" described above, like the "three-phase fluidized bed 7" shown in Fig. 1, a heat exchanger may be used, where a first circulation line 9 and a second circulation line 11 branched from the first circulation line 9 are coupled at an upper end portion, and a compressor 3 (steam re-compressor) is arranged in a channel of the first circulation line 9. Furthermore, a blower is arranged in a channel of the second circulation line 11.

In addition, it is preferable that seawater, media, extracted solids, and other materials are fluidized in a heat exchanging unit. By configuring in such a manner, thermal efficiency can be increased through fluidized seawater, media, extracted solids, and other materials. In addition, by allowing seawater, media, extracted solids, and other materials to flow in the "second heat exchanger," a heat exchange surface portion onto which seawater, media, extracted solids, and other materials come into contact can be prevented from scaling. Further, by allowing seawater, media, extracted solids, and other materials to flow, a clean heat exchange surface can be maintained even in a condition where a raw liquid is concentrated at a high level.

### [1-3] Seawater supply means, steam supply means:

In addition, the "seawater desalination device" described above includes a seawater supply means that supplies seawater to the first heat exchanger, as well as further supplying seawater from the first heat exchanger to the second heat exchanger. In addition, the "seawater desalination device" described above includes a steam supply means that supplies steam evaporated from seawater to the second heat exchanger. By configuring in such a manner, a raw material, i.e. seawater, and steam can be supplied effectively. Accordingly, seawater can be desalinated and concentrated, salt can be extracted, and other necessary tasks can be carried out.

### (Seawater supply means)

The "seawater supply means" described above is configured with various components including, for example, a "raw liquid tank 17a" for temporarily storing a "raw liquid," i.e. "seawater," taken from a "seawater suction port" which is also a supply port for a "seawater desalination device"; a pump P for feeding (delivering) seawater into the "seawater desalination device"; and a seawater supply pipe. However, the present invention is not limited to such a configuration.

### (Steam supply means)

The "steam supply means" described above includes various components, for example, a steam compressing blower, a steam supply pump, and a compressor for steam. With the steam supply means, heat exchange can be done efficiently by supplying steam evaporated from seawater into the second heat exchanger.

### [1-4] First discharge means, second discharge means:

The "seawater desalination device" described above includes a first discharge means that discharges externally either of a "concentrated seawater liquid after seawater is concentrated" or "salt extracted from seawater," or "both of concentrated seawater liquid and salt." In addition, a second discharge means that discharges externally freshwater separated from seawater is included. By configuring in such a manner, the device can discharge externally and effectively not only either of a "concentrated seawater liquid after seawater is concentrated" or "salt extracted from seawater," or "both of concentrated seawater liquid and salt," but also freshwater separated from seawater.

### (First discharge means)

The "first discharge means" described above may include, for example, a discharge pipe; a tank for storing liquids and solids, including recovered "concentrated seawater liquid," and "salt extracted from seawater"; and a pump. In addition, the "first discharge means 21" described above may discharge externally and separately "concentrated seawater liquid" or "salt extracted from seawater" by arranging another discharge pipe separated from the first discharge pipe.

### (Second discharge means)

The "second discharge means" described above may be a configuration that includes, for example, a second discharge pipe; a motor and a pump for delivering "freshwater separated from seawater"; and a freshwater recovery tank.

### [1-5] Water-droplet separation means:

In the "seawater desalination device" described above, a "water-droplet separation means" is arranged for separating droplets of water mixed into steam evaporated from seawater and discharged from the "second heat exchanger" described above. By configuring in such a manner, "droplets of water" mixed into steam evaporated from seawater and discharged from the "second heat exchanger" described above can be effectively separated. Accordingly, by removing "droplets of water" mixed into steam evaporated from seawater, the steam re-compressor can be stably operated with a predetermined capability.

The "water-droplet separation means" described above may include, for example, a cyclone separator and a mist separator. However, the present invention is not limited to such components.

In addition, a discharge pipe may be arranged onto the second heat exchanger as a discharge means to discharge extracted salt and other materials. By configuring in such a manner, mainly solid salt can easily and preferably be discharged externally.

### (Seawater supply device)

The seawater desalination device according to the present invention supplies seawater to the three-phase fluidized bed 7. A raw liquid supply device may include, in addition to a two-fluid nozzle arranged on an upper portion of the three-phase fluidized bed 7, a pressure nozzle and a pressure two-fluid nozzle. Another seawater supply device may include various components such as a dripping type supply pipe, a dripping nozzle, and a liquid delivery pipe for forcibly delivering a liquid into the fluidized bed.

### [2] Seawater desalination method according to the present invention:

A seawater desalination method according to the present invention is mainly a method of seawater desalination, and includes a pressurized steam generation step, a first heat-exchange step, and a second heat-exchange step, wherein the second heat-exchange step is conducted using a three-phase fluidized bed and steam generated in a process for evaporating seawater is used as a fluidizing gas in the three-phase fluidized bed, and further includes, a seawater supply step, a steam supply step, a first discharge step, and a water-droplet separation step. The "pressurized steam generation step" described above is a step of generating pressurized steam by pressurizing a steam. The "first heat-exchange step" described above is a step of exchanging amount of liquid sensible heat of seawater to be desalinated with amount of liquid sensible heat after pressurized steam is condensed, and amount of sensible heat of a concentrated liquid after seawater is concentrated. The "second heat-exchange step" described above is a step capable of exchanging amount of heat of pressurized steam, amount of latent heat of vaporization of seawater, and amount of steam sensible heat when seawater is evaporated, as well as is capable of concentrating seawater. The "seawater supply step" described above is a step of supplying seawater to the first heat-exchange step, and further supplying seawater from the first heat-exchange step to the second heat-exchange step. The "steam supply step" described above is a step of supplying steam evaporated from seawater to the second heat-exchange step. The "first discharge step" described above is a step of discharging externally either of a concentrated seawater liquid after seawater is concentrated or salt extracted from the seawater, or both of concentrated seawater liquid and salt. The "water-droplet separation step" described above is a step of separating droplets of water mixed into steam evaporated from seawater and discharged in the second heat-exchange step.

According to the seawater desalination method described above, seawater can be desalinated through the pressurized steam generation step capable of generating pressurized steam by pressurizing a steam based on an self-heat recuperation technology. In addition, with the seawater desalination method according to the present invention, generated heat (amount of heat) can fully be exchanged in a process from concentrating seawater to be desalinated to discharging externally either of a "concentrated seawater liquid after seawater is concentrated" or "salt extracted from seawater," or "both of concentrated seawater liquid and salt," and a "liquid after pressurized steam is condensed." Accordingly, a high efficiency heat exchange can be achieved. In addition, exchanging generated heat (amount of heat) fully in a process from concentrating seawater to be desalinated to discharging externally either of a "concentrated seawater liquid after seawater is concentrated" or "salt extracted from seawater," or "both of concentrated seawater liquid and salt," and a "liquid after pressurized steam is condensed" can provide a necessary energy for heat exchange, which is equivalent to a temperature difference, by driving a steam compressor only. Accordingly, the seawater desalination method according to the present invention requires no heating operation at all.

In the "seawater desalination method" described above, it is preferable that "pressurized steam" generated in a process for evaporating a raw liquid, i.e. seawater, is used. Additionally, instead of steam generated in a process for evaporating a raw liquid, i.e. seawater, another steam may be used. However, it is still preferable that at least steam generated in a process for evaporating a raw liquid, i.e. seawater, is used in a process. However, it is preferable that more steam generated in a process for evaporating a raw liquid, i.e. seawater, described above is contained, because the more the steam generated in a process for evaporating a raw liquid, i.e. seawater, is contained, the more the energy efficiency increases.

"Exchanging amount of heat between pressurized steam and seawater to be desalinated" through the seawater desalination method according to the present invention means that generated heat (amount of heat) is fully exchanged in a process from "supplying a raw liquid, i.e. seawater," through concentrating seawater to be desalinated, to discharging externally either of a "concentrated seawater liquid after seawater is concentrated" or "salt extracted from seawater," or "both of concentrated seawater liquid and salt," and a "liquid after pressurized steam is condensed."

In addition, in the "seawater desalination method" according to the present invention, a circulation step of circulating either of sensible heat or latent heat, or both of sensible heat and latent heat is included in any of a pressurized steam generation step, a heat-exchange step, and a steam re-compression step to exchange either of sensible heat or latent heat, or both of sensible heat and latent heat. By configuring in such a manner, no complex step is required, and steam generated in a process for evaporating seawater is used as a fluidized gas for increased energy efficiency. In addition, while responding to change of property of seawater along with seawater desalination, a stable and high energy-saving operation is possible at a high concentration level, compared with conventional methods, as well as scaling is prevented to a heat exchange surface.

Furthermore, with the "seawater desalination method" according to the present invention, the "seawater desalination device" according to the invention is used. In addition, with the "pressurized steam generation step," the "first heat-exchange step," the "second heat-exchange step," the "seawater supply step," the "steam supply step," the "first discharge step," and the "water-droplet separation step" of the "seawater desalination method" according to the present invention described above, the "steam re-compressor," the "first heat exchanger," the "second heat exchanger," the "seawater supply means," the "steam supply means," the "first discharge means," the "second discharge means," and the "water-droplet separation means" of the "seawater desalination device" described herein are used. Accordingly, the matters described in the "seawater desalination device" herein can be applied to the "seawater desalination method" according to the present invention.

With the "seawater desalination method" according to the present invention, the "seawater desalination device" according to the invention is used. Accordingly, the matters described in the "seawater desalination device" can be applied to the "seawater desalination method" according to the present invention.

### [3] Specific aspect of a seawater desalination device and a seawater desalination method:

A specific aspect of the seawater desalination device and the seawater desalination method according to the present invention will now be described herein. However, the present invention is not limited to the seawater desalination device and the seawater desalination method which will be described below.

At this point, the seawater desalination device according to the specific aspect of the present invention may include, as shown in Fig. 1, the seawater desalination device 1 according to the present invention. The seawater desalination device 1 includes a compressor 3, a first heat exchanger 5, a seawater supply means 17, a steam supply means 19, and a three-phase fluidized bed 7.

In the seawater desalination device 1, as shown in Fig. 1, a raw liquid, i.e. seawater, is supplied into a supply port of the seawater supply means 17, stored in a "raw liquid tank 17a" that configures the seawater supply means 17, and delivered into the "first heat exchanger 5" through a pump P at a predetermined amount. In the "first heat exchanger 5," heated "seawater" is delivered to the "second heat exchanger 7" via the "seawater supply pipe 17c" that configures the seawater supply means 17. In the "first heat exchanger 5" described above, a raw liquid, i.e. seawater, is heated, and sensible heat is exchanged between the raw liquid, i.e. seawater, produced condensed water (concentrated seawater) or "extracted salt," and a "liquid after pressurized steam is condensed."

In addition, in the seawater desalination device 1 described above, seawater heated in the "first heat exchanger 5" described above is delivered to the "second heat exchanger 7" via the "seawater supply pipe 17c" that configures the seawater supply means 17. As the "second heat exchanger 7" is a three-phase fluidized bed, "heated seawater" in the "first heat exchanger 5" described above, which is delivered into the "three-phase fluidized bed 7," is evaporated and concentrated with amount of "steam heated in the compressor 3" delivered into the three-phase fluidized bed 7 described above. That is, "moisture (steam)" when seawater is evaporated with amount of steam heated in the compressor 3" is compressed (heated) through an adiabatic compression of the compressor 3.

In addition, in the seawater desalination device 1, part of steam when seawater is evaporated is delivered again into the three-phase fluidized bed 7 by a blower 13 via a second circulation line 11 without passing through the compressor 3.

In addition, in the "seawater desalination device 1," upon a heat transfer pipe is arranged inside the "three-phase fluidized bed 7" described above, heat of steam and water will be fully exchanged in the three-phase fluidized bed 7. That is, steam compressed (heated) in the compressor 3 passes through the heat transfer pipe arranged inside the second heat exchanger 7 for heat exchange with seawater in the second heat exchanger 7. After heat exchanged, steam-condensed water is further delivered into the first heat exchanger 5 for heat exchange with seawater delivered from the seawater supply means 17 into the first heat exchanger 5, in the first heat exchanger 5. After that, the "water" that is heat-exchanged in the first heat exchanger 5 is discharged externally as "freshwater" from the seawater desalination device 1 via the second discharge means 23. In this second discharge means 23, a freshwater recovery tank may be arranged for efficient recovery.

In addition, either of a concentrated seawater liquid after seawater is concentrated or salt extracted from seawater, or both of concentrated seawater liquid and salt, is or are discharged externally from the three-phase fluidized bed 7 described above via the first discharge pipe of the first discharge means 21. Furthermore, in the first discharge means 21, in addition to the first discharge pipe described above, a separate discharge pipe or the like may be arranged to separately discharge externally a "concentrated seawater liquid after seawater is concentrated" and "salt extracted from seawater."

### (Excessive-heating process)

Furthermore, in order to efficiently desalinate seawater, it is preferable that a channel in a seawater desalination device is excessively heated before desalinating seawater. Because seawater can effectively be desalinated by doing so. In such an excessive-heating process, for example, the channel may be dried after hot water is circulated in the channel. In addition, steam or hot air may be circulated in the channel. In still another example, a heater may be wrapped around externally the device for heating. However, the present invention is not limited to such examples.

Furthermore, a mark X shown in Fig. 1 indicates a steam flow in the "seawater desalination device." Similarly, a mark Y indicates a water flow in the "seawater desalination device." Similarly, a mark Z indicates a seawater flow in the "seawater desalination device." In addition, a mark "M" indicates a motor, while a mark P indicates a "pump."

### (Examples)

The present invention will now be specifically described herein with reference to some practical examples, but the present invention is not limited to these practical examples.

### (Example 1)

As shown in Fig. 1, a seawater desalination device 1 was prepared by arranging a steam re-compressor 3, a first heat exchanger 5, a second heat exchanger 7, a raw liquid supply means, a steam supply means, a first discharge means 21, a second discharge means 23, and a water-droplet separation means 25. A liquid stored in a raw liquid tank was supplied to the first heat exchanger 5 and the second heat exchanger 7 with a liquid delivery pump. On this occasion, the liquid to be delivered was set to a temperature of 25°C. Additionally, seawater was supplied to the first heat exchanger 5 with the liquid delivery pump at 30 kg/h. A raw material was heated to 91°C, at an outlet of the first heat exchanger. Next, steam at an outlet of the second heat exchanger in which latent heat and steam sensible heat would be heat-exchanged was 101°C, 0.1 MPa. And then, steam and a concentrated liquid were separated through the water-droplet separation means (separator), and the steam was compressed with the steam re-compressor to 120°C, 0.16 MPa. The pressurized steam was supplied again into the second heat exchanger 7, and heat-exchanged with newly supplied seawater. Additionally, part of steam was separated and used as a fluidized gas in the second heat exchanger 7. For steam supplied from the steam re-compressor 3 to the second heat exchanger 7, steam sensible heat and latent heat were exchanged in the second heat exchanger 7, and a state at the outlet of the second heat exchanger 7 was 110°C. After that, sensible heat was exchanged in the first heat exchanger 5, and freshwater was recovered in a freshwater recovery tank. At first, a heat transfer area of a heat transfer region in the second heat exchanger 7 was not enough, thus heat was not exchanged fully. After that, a desirable heat transfer area was selected for a good operation. As a result, freshwater was obtained as designed at a flow rate of 18 kg/h. An amount of energy of 1.8 kW was required for steam re-compression in this condition.

### (Comparative example 1)

From a seawater desalination device as shown in Fig. 1, a steam re-compressor 3, a first heat exchanger 5, a second heat exchanger 7, and a steam supply means were removed, while a seawater desalination vessel was prepared. And then, seawater was delivered to the seawater desalination vessel with a liquid delivery pump under a condition where a liquid delivery temperature was 25°C, and a flow rate was 30 kg/h. The same operation with Example 1 was conducted, except a heater was used for heating a liquid, and steam was re-compressed and heat-exchanged, and additionally heat-exchanged. The device was operated under this condition and freshwater was obtained at a flow rate of 18 kg/h. An amount of heat of 13 kW was required for evaporating a raw liquid through a calculation of energy required for the operation.

### (Consideration)

As a result of Example 1, because an amount of heat required for evaporating a raw material is dramatically smaller than an amount of heat required in Comparative example 1, an energy-saving effect is fully demonstrated. Accordingly, an effect of the present invention is supported. Additionally, by changing a heat transfer area, a condition for keeping energy to be consumed in minimum can be selected. On the other hand, Comparative example 1 demonstrates a poor energy saving performance, thus, low thermal efficiency.

### (Example 2)

As shown in Fig. 1, a seawater desalination device was prepared by arranging a steam re-compressor 3, a first heat exchanger 5, a second heat exchanger 7, a raw liquid supply means, a steam supply means, a first discharge means 21, a second discharge means 23, and a water-droplet separation means 25. A saturated NaCl solution stored in a raw liquid tank was supplied into the second heat exchanger with a liquid delivery pump. On this occasion, the liquid to be delivered was set to a temperature of 25°C. The heat exchanger was operated in this state to allow the saturated NaCl solution to flow into the second heat exchanger. As a result, no NaCl was extracted on a surface of the heat exchanger coming into contact with the solution flowing inside the second heat exchanger, even in a state where moisture in the saturated NaCl solution was evaporated and seawater desalination is proceeding.

### (Comparative example 2)

A seawater desalination device was prepared, where a steam supply means was removed from a seawater desalination device as shown in Fig. 1. A saturated NaCl solution stored in a raw liquid tank was supplied into the second heat exchanger with a liquid delivery pump. On this occasion, the liquid to be delivered was set to a temperature of 25°C. The heat exchanger was operated in this state to allow moisture in the saturated NaCl solution to evaporate in the second heat exchanger. As a result, NaCl was extracted on a surface of the heat exchanger coming into contact with the saturated NaCl solution flowing inside the second heat exchanger, as moisture in the saturated NaCl solution is evaporated.

### (Consideration)

As a result of Example 2, because the saturated NaCl solution was allowed to flow inside the second heat exchanger 7, no NaCl was extracted on the surface of the heat exchanger, and thermal transfer efficiency is prevented from being lowered. Accordingly, an effect of the present invention is supported. On the other hand, in Comparative example 2, energy saving and stable operation cannot be carried out due to scaling of the surface of the heat exchanger.

### Industrial Applicability

A seawater desalination device and a seawater desalination method according to the aspects and examples of the present invention can be used for seawater desalination and salt extraction. Particularly, the present invention provides a seawater desalination device and a seawater desalination method capable of achieving a high-efficiency heat exchange operation through which a necessary energy for heat exchange, which is equivalent to a temperature difference, can be provided by a steam compressor only. Particularly, no heating operation is required because a necessary energy for heat exchange, which is equivalent to a temperature difference, can be provided by a steam compressor only.

### Description of Reference Numerals

1: seawater desalination device, 3: compressor (steam re-compressor), 5: first heat exchanger, 7: second heat exchanger, (three-phase fluidized bed), 9: first circulation line, 11: second circulation line, 13: steam supply means (blower), 15: heat transfer pipe, 17: seawater supply means, 19: steam supply means, 21: first discharge means, 23: second discharge means, 25: water-droplet separation means (separator), M: motor, P: pump, X, Y, Z: arrows.

## Claims

1. A seawater desalination device for seawater desalination, comprising:
a steam re-compressor (3) capable of generating pressurized steam by pressurizing steam;
a first heat exchanger (5) capable of exchanging amount of liquid sensible heat of seawater to be desalinated with amount of liquid sensible heat after the pressurized steam is condensed, and amount of sensible heat of a concentrated liquid after the seawater is concentrated;
a second heat exchanger (7) capable of exchanging amount of heat of the pressurized steam, latent heat of vaporization of the seawater, and amount of steam sensible heat when the seawater is evaporated, and capable of concentrating the seawater, wherein the second heat exchanger is a three-phase fluidized bed;
a steam circulation means for using steam generated in a process or evaporating seawater as a fluidizing gas in the three-phase fluidized bed;
seawater supply means (17) that supplies the seawater to the first heat exchanger, and further supplying the seawater from the first heat exchanger to the second heat exchanger;
steam supply means (19) that supplies steam evaporated from the seawater to the second heat exchanger;
first discharge means (21) that discharges externally either of the concentrated seawater liquid after the seawater is concentrated or salt extracted from the seawater, or both of the concentrated seawater liquid and the salt;
second discharge means (23) that discharges externally freshwater separated from the seawater; and
water-droplet separation means (25) that separates droplets of water mixed into the steam evaporated from the seawater and discharged from the second heat exchanger.

2. The seawater desalination device according to claim 1, wherein all amount of heat necessary for seawater desalination is fully generated by the steam re-compressor.

3. The seawater desalination device according to claim 1 or 2, wherein the second heat exchanger includes a heat transfer region for desalinating the seawater, the heat transfer region having an adjustable-formed heat transfer area.

4. The seawater desalination device according to any one of claims 1 to 3, wherein the steam circulation means include a circulation line for circulating steam into a channel in the second heat exchanger.

5. A seawater desalination method for seawater desalination using the device of claim 1, said method comprising:
a step of generating pressurized steam by pressurizing steam;
a first heat-exchange step of exchanging amount of liquid sensible heat of seawater to be desalinated with amount of liquid sensible heat after the pressurized steam is condensed, and amount of sensible heat of a concentrated liquid after the seawater is concentrated; and
a second heat-exchange step of exchanging amount of heat of the pressurized steam, amount of latent heat of vaporization of the seawater, and amount of steam sensible heat when the seawater is evaporated, and concentrating the seawater, wherein the second heat-exchange step is conducted using a three-phase fluidized bed and steam generated in a process for evaporating seawater is used as a fluidizing gas in the three-phase fluidizing bed; the method further comprising:
a step of supplying the seawater to the first heat-exchange step, and further supplying the seawater from the first heat-exchange step to the second heat-exchange step;
a step of supplying steam evaporated from the seawater to the second heat-exchange step;
a first discharge step of discharging externally either of the concentrated seawater liquid after the seawater is concentrated or salt extracted from the seawater, or both of the concentrated seawater liquid and the salt; and
a step of separating droplets of water mixed into the steam evaporated from the seawater and discharged in the second heat-exchange step.

6. The seawater desalination method according to claim 5, comprising the step of circulating steam into the second heat-exchange step.

## Patentansprüche

1. Meerwasserentsalzungsvorrichtung zur Meerwasserentsalzung, umfassend:
einen Dampf-Rekompressor (3), der Druckdampf erzeugen kann, indem Dampf mit Druck beaufschlagt wird;
einen ersten Wärmetauscher (5), der eine Menge an fühlbarer Wärme der Flüssigkeit von zu entsalzendem Meerwasser durch eine Menge an fühlbarer Wärme der Flüssigkeit nach der Kondensation des Druckdampfes und eine Menge an fühlbarer Wärme einer konzentrierten Flüssigkeit nach der Konzentration des Meerwassers austauschen kann;
einen zweiten Wärmetauscher (7), der eine Menge an Wärme des Druckdampfes, latente Wärme aus der Verdampfung des Meerwassers und eine Menge fühlbare Wärme des Dampfes austauschen kann, wenn das Meerwasser verdampft wird, und der das Meerwasser konzentrieren kann, wobei der zweite Wärmetauscher ein Dreiphasen-Fließbett ist;
ein Dampfzirkulationsmittel zur Verwendung von Dampf, der in einem Prozess zum Verdampfen von Meerwasser als ein Wirbelgas in dem Dreiphasen-Fließbett erzeugt wurde;
ein Meerwasserversorgungsmittel (17), das das Meerwasser dem ersten Wärmetauscher zuführt und ferner das Meerwasser aus dem ersten Wärmetauscher dem zweiten Wärmetauscher zuführt;
ein Dampfversorgungsmittel (19), das aus dem Meerwasser verdampften Dampf dem zweiten Wärmetauscher zuführt;
ein erstes Austragemittel (21), das extern entweder die konzentrierte Meerwasserflüssigkeit, nachdem das Meerwasser konzentriert wurde, oder aus dem Meerwasser extrahiertes Salz oder sowohl die konzentrierte Meerwasserflüssigkeit als auch das Salz austrägt;
ein zweites Austragemittel (23), das extern aus dem Meerwasser abgetrenntes Frischwasser austrägt; und
ein Wassertropfentrennmittel (25), das in den aus dem Meerwasser verdampften und dem zweiten Wärmetauscher ausgetragenen Dampf gemischte Wassertropfen abtrennt.

2. Meerwasserentsalzungsvorrichtung nach Anspruch 1, wobei die gesamte Menge an Wärme, die zur Meerwasserentsalzung notwendig ist, vollständig von dem Dampf-Rekompressor erzeugt wird.

3. Meerwasserentsalzungsvorrichtung nach Anspruch 1 oder 2, wobei der zweite Wärmetauscher eine Wärmeübertragungsregion zum Entsalzen des Meerwassers umfasst, wobei die Wärmeübertragungsregion eine einstellbar ausgebildete Wärmeübertragungsfläche aufweist.

4. Meerwasserentsalzungsvorrichtung nach einem der Ansprüche 1 bis 3, wobei das Dampfzirkulationsmittel eine Zirkulationsleitung zum Zirkulieren von Dampf in einen Kanal in dem zweiten Wärmetauscher umfasst.

5. Meerwasserentsalzungsverfahren zur Meerwasserentsalzung unter Verwendung der Vorrichtung nach Anspruch 1, wobei das Verfahren umfasst:
einen Schritt zur Erzeugung von Druckdampf, indem Dampf mit Druck beaufschlagt wird;
einen ersten Wärmeaustauschschritt zum Austauschen einer Menge an fühlbarer Wärme der Flüssigkeit von zu entsalzendem Meerwasser durch eine Menge an fühlbarer Wärme der Flüssigkeit nach der Kondensation des Druckdampfes und eine Menge an fühlbarer Wärme einer konzentrierten Flüssigkeit nach der Konzentration des Meerwassers; und
einen zweiten Wärmeaustauschschritt zum Austauschen einer Menge an Wärme des Druckdampfes, einer Menge an latenter Wärme aus der Verdampfung des Meerwassers und einer Menge an fühlbarer Wärme des Dampfes, wenn das Meerwasser verdampft wird, und Konzentrieren des Meerwassers, wobei der zweite Wärmeaustauschschritt unter Verwendung eines Dreiphasen-Fließbettes durchgeführt wird und Dampf, der in einem Prozess zum Verdampfen von Meerwasser erzeugt wurde, als ein Wirbelgas in dem Dreiphasen-Fließbett verwendet wird; wobei das Verfahren ferner umfasst:
einen Schritt zum Zuführen des Meerwassers dem ersten Wärmeaustauschschritt und ferner Zuführen des Meerwassers aus dem ersten Wärmeaustauschschritt dem zweiten Wärmeaustauschschritt;
einen Schritt des Zuführens von aus dem Meerwasser verdampftem Dampf dem zweiten Wärmeaustauschschritt;
einen ersten Austrageschritt zum externen Austragen entweder der konzentrierten Meerwasserflüssigkeit, nachdem das Meerwasser konzentriert wurde, oder des aus dem Meerwasser extrahierten Salzes oder sowohl der konzentrierten Meerwasserflüssigkeit als auch des Salzes; und
einen Schritt des Abtrennens von in den aus dem Meerwasser verdampften und dem zweiten Wärmeaustauschschritt ausgetragenen Dampf gemischten Wassertropfen.

6. Meerwasserentsalzungsverfahren nach Anspruch 5, umfassend den Schritt des Zirkulierens von Dampf in den zweiten Wärmeaustauschschritt.

## Revendications

1. Dispositif de dessalement d'eau de mer pour le dessalement d'eau de mer, comprenant :
un recompresseur de vapeur (3) capable de produire de la vapeur sous pression en mettant sous pression de la vapeur ;
un premier échangeur thermique (5) capable d'échanger une quantité de chaleur sensible de liquide dans l'eau de mer à dessaler avec une quantité de chaleur sensible de liquide après condensation de la vapeur sous pression, et une quantité de chaleur sensible d'un liquide concentré après condensation de l'eau de mer;
un deuxième échangeur thermique (7) capable d'échanger une quantité de chaleur de la vapeur sous pression, une chaleur latente de vaporisation de l'eau de mer, et une quantité de chaleur sensible de vapeur lorsque l'eau de mer est évaporée, et capable de concentrer l'eau de mer, dans lequel le deuxième échangeur thermique est un lit fluidisé à trois phases ;
un moyen de circulation de vapeur pour utiliser de la vapeur générée dans un procédé d'évaporation de l'eau de mer comme un gaz fluidisant dans le lit fluidisé à trois phases ;
un moyen d'alimentation en eau de mer (17) qui fournit l'eau de mer au premier échangeur thermique, et qui fournit en outre l'eau de mer du premier échangeur thermique au deuxième échangeur thermique ;
un moyen d'alimentation en vapeur (19) qui fournit la vapeur évaporée de l'eau de mer au deuxième échangeur thermique ;
un premier moyen d'évacuation (21) qui évacue à l'extérieur soit le liquide concentré d'eau de mer après concentration de l'eau de mer, soit du sel extrait de l'eau de mer, soit à la fois le liquide concentré d'eau de mer et le sel ;
un deuxième moyen d'évacuation (23) qui évacue à l'extérieur de l'eau douce séparée de l'eau de mer ; et
un moyen de séparation de gouttelette d'eau (25) qui sépare les gouttelettes d'eau mélangées à la vapeur évaporée de l'eau de mer et évacuées du deuxième échangeur thermique.

2. Dispositif de dessalement d'eau de mer selon la revendication 1, dans lequel toute la quantité de chaleur nécessaire pour le dessalement d'eau de mer est entièrement produite par le recompresseur de vapeur.

3. Dispositif de dessalement d'eau de mer selon la revendication 1 ou 2, dans lequel le deuxième échangeur thermique comprend une zone de transfert de chaleur pour dessaler l'eau de mer, la zone de transfert de chaleur ayant une zone de transfert de chaleur formée réglable.

4. Dispositif de dessalement d'eau de mer selon l'une quelconque des revendications 1 à 3,
dans lequel le moyen de circulation de vapeur comprend une conduite de circulation pour faire circuler la vapeur dans un canal dans le deuxième échangeur thermique.

5. Procédé de dessalement d'eau de mer pour le dessalement d'eau de mer en utilisant le dispositif selon la revendication 1, ledit procédé comprenant :
une étape de production de vapeur sous pression en mettant sous pression de la vapeur;
une première étape d'échange thermique consistant à échanger une quantité de chaleur sensible de liquide de l'eau de mer à dessaler avec une quantité de chaleur sensible de liquide après condensation de la vapeur sous pression, et une quantité de chaleur sensible d'un liquide concentré après concentration de l'eau de mer ; et
une deuxième étape d'échange thermique consistant à échanger une quantité de chaleur de la vapeur sous pression, une quantité de chaleur latente de vaporisation de l'eau de mer, et une quantité de chaleur sensible de vapeur lorsque l'eau de mer est évaporée, et à concentrer l'eau de mer, où
la deuxième étape d'échange thermique est conduite en utilisant un lit fluidisé à trois phases et la vapeur générée dans un procédé d'évaporation d'eau de mer est utilisée comme un gaz fluidisant dans le lit fluidisé à trois phases ; le procédé comprenant en outre :
une étape consistant à alimenter de l'eau de mer à la première étape d'échange thermique, et une étape d'alimentation supplémentaire de l'eau de mer de la première étape d'échange thermique à la deuxième étape d'échange thermique ;
une étape consistant à alimenter de la vapeur évaporée de l'eau de mer à la deuxième étape d'échange thermique ;
une première étape d'évacuation consistant à évacuer à l'extérieur soit le liquide concentré d'eau de mer après concentration de l'eau de mer soit le sel extrait de l'eau de mer, soit le liquide concentré d'eau de mer et le sel ; et
une étape consistant à séparer des gouttelettes d'eau mélangées à la vapeur évaporée de l'eau de mer et évacuées dans la deuxième étape d'échange thermique.

6. Procédé de dessalement d'eau de mer selon la revendication 5, comprenant l'étape consistant à faire circuler la vapeur dans la deuxième étape d'échange thermique.
